# EUROPEAN PATENT SPECIFICATION

(11) **EP 1 704 190 B1**
(45) Date of publication and mention of the grant of the patent: **26.09.2007**
(21) Application number: 04815620.2
(22) Date of filing: 29.12.2004
(51) Int. Cl.: C09D 11/00, C09D 11/10, C09D 11/02

(54) **LOW VOC WEB OFFSET HEATSET INKS**
HEATSET-ROTATIONSOFFSETDRUCKFARBEN MIT GERINGEM VOC-GEHALT
ENCRES HEATSET POUR ROTATIVE OFFSET A FAIBLE TENEUR EN COMPOSES ORGANIQUES VOLATILS

(30) Priority: 31.12.2003 US 751246
(43) Date of publication of application: 27.09.2006
(73) Proprietor: Sun Chemical Corporation, Parsippany, NJ 07054-1285 (US)
(72) Inventor: DANDREAUX, Gary, F., Hackensack, NJ 07601 (US); KLEIN, David, Wayne, NJ-07470 (US); DURAND, Richard, R., Jr., Oradell, NJ 07649 (US); FRINAULT, Thierry, Romford, RM3 OP (GB); SMITH, Kevin, Saylorsburg, PA 18353 (US)
(74) Representative: Vossius & Partner
(86) International application number: PCT/US2004/043590
(87) International publication number: WO 2005/066292

(56) References cited:
- WO-A-96/34922
- US-A- 5 849 833
- US-A1- 2003 134 940

## Description

The invention relates to a novel Web Offset heatset ink composition that dries at higher speeds and contains a latex polymer with amine functionality and having less than 2% by weight of volatile organic compounds.

Historically, lithographic web offset heatset inks contain between 30 and 45% volatile organic compounds (VOC). As the VOC have detrimental effects on the environment, it is desirable to reduce the VOC content as much as possible. Initial attempts at solving this problem involved the use of chemical reactions that were triggered in the press oven. However, any systems that led to cure did not have shelf stability.

Therefore, typically, a heat setting web offset ink will contain the following major components:
1. A high molecular weight ink resin. This material provides the toughness and gloss the ink requires on drying. It also helps to disperse the pigment.
2. Solvents: The solvent provides the fluidity to the ink before it is placed on the web and dried in an oven.
3. Pigment.
4. Other minor components can include: gallants, which provide structure to the ink, plasticizers (non volatile solvents), waxes, driers, thickeners, antioxidants.

The ink sets or dries by evaporation (and to some degree by penetration of the ink oil into the paper) of the ink oil on heating at 121-149°C (250-300°F), leaving behind a hard polymeric film.

EP 731150 A1 960911 describes rapid thermosetting low VOC web offset lithographic ink systems comprising solid resin, drying oil alkyds, bodied drying oil, vegetable oil, fatty acids, multifunctional unsaturated polyester, reducing agents and transition metal salts of organic acids. Also listed as part of that ink system is an aqueous fountain solution containing peroxides that promote free radical polymerization of the Ink. WO96/34922, U.S. Patent 5,431,721, and U.S. Patent 5,545,741, 1996 describe lithographic Inks which employ non-volatile solvents and set by penetrat ion of the non-volatile solvent into the stock.

Despite the teachings of the prior art, there is still a need to formulating low VOC web offset heatset Inks that has good shelf stability and high dry speed.

The present invention provides a Web Offset heatset ink composition comprising an aqueous polymer latex dispersed in an ink base that comprises:
(a) an ink resin;
(b) a non-volatile plasticizer, and
(d) a pigment;
wherein said polymer latex has amine functional groups and comprises a protective colloid which comprises acid functional groups, and wherein said ink had less than about 2 percent by weight of volatile organic compounds (VOC).

The present invention also provides a use of an aqueous polymer latex as defined above for increasing drying or setting speed of a Web Offset heatset ink composition which has less than about 2 percent by weight of volatile organic compounds (VOC) and which comprises :
(a) an ink resin;
(b) a non-volatile plasticizer, and
(d) a pigment.

The present invention further provides a use of an aqueous polymer latex having amine functional groups and a protective colloid which comprises acid functional groups for increasing shelf stability of a Web Offset heatset ink composition which has less than about 2 percent by weight of volatile organic compounds (VOC) and which comprises:
(a) an ink resin;
(b) a non-volatile plasticizer; and
(d) a pigment.

Other objects and advantages of the present invention will become apparent from the following description and appended claims.

Low VOC (less than about 2% and preferably about 0% VOC) web offset heatset inks which print cleanly on conventional lithographic plates and dry at press speeds of at least 5m/s (1000 ft/minute) under typical printing conditions are described. The inks consist of a polymer latex dispersed in an ink base made up of ink resins, a non- volatile plasticizer (preferably ethylhexyltallate), and the pigment. The key attribute which leads to shelf stability, but allows for heatsetting on the press, is the use of a water soluble, acid functionalized protective colloid (support resin) which protects the latex particle from interacting with the ink resin and plasticizer on the shelf, but collapses and allows for interaction in the oven of the press.

The polymer latex employed by the present invention (preferably acrylic:styrene copolymer latex) has amine functionality which results in a faster setting ink system when compared to a non-amine functional latex. The ink minus the latex is a viscous oil, and as it is non volatile, it will not dry (or set) under heatsetting conditions. With the latex present, once the ink reaches the oven, water and ammonia evaporate, and heat forces collapse of the glassy latex particles so that they may blend with the rest of the ink, giving rise to a hard film. The amine groups in the latex can react with acid groups (forming salts) in the ink resins upon collapse of the latex in the oven and give rise to an even tougher film. Accordingly, this increase in setting speed is believed to be due to the attraction between the amine functional latex and the acid functional Ink resins that occurs once the water and ammonia have been driven off.

The increase in stability is due to an acid functionalized protective colloid (preferably JONCRYL®-type resin) within the latex itself. The protective colloid prevents the latex particles from interacting with the rest of the ink until it reaches the oven, thus affording shelf stability. The latex containing the protective colloid is termed a supported latex. Therefore, a supported latex gives greater stability than an unsupported latex in a low VOC web offset heatset ink.

### Example 1 - Preparation and Testing of a Comparative Web Offset Heatset ink

A web Offset heatset ink was prepared using the ingredients listed below which include Lucidene 612, an acrylic/styrene latex that does not contain amine functionality.

| Ingredients: | | % |
|---|---|---|
| 1. | Raven 760 (Black pigment, Columbian Chemicals Company) | 10.5 |
| 2. | RP-305 (phenolic modified rosin ester, acid #132, softening point - 128°C, Westvaco) | 13.3 |
| 3. | VSPR-75 (phenolic modified rosin ester, acid #18, softening point 146-166°C, Ascona/Akzo Nobel) | 13.2 |
| 4. | Lucidene 612 (acrylic/styrene emulsion, Rohm & Haas) | 28.3 |
| 5. | Ethylhexyltallate (Chemol) | 34.7 |
| | | 100.0 |

Briefly, the RP-305, VSPR-75, and ethylhexyltallate were combined in an ointment tin and heated on a hot plate with stirring until molten and homogeneous. The mixture was allowed to cool to room temperature. Then, the Raven 760 was dispersed in the mixture and grinded on a 3-roll mill until it became smooth and well dispersed. The mixture was then placed in a glass jar where the Lucidene 612 was added with stirring and mixed thoroughly.

The tack of the ink was measured on the Go Technology Digital inkometer at a speed of 1200 rpm. The tack after one minute was 12.1 gram- meters. The viscosity of the ink was measured on the automated Duke Viscometer. The viscosity of the ink was 31 Pa·s (210 poise). The ink was printed on Rochester institute of Technology's (R.I.T.s) Harris M-1000 web offset heatset press at speeds up to 6m/s (1200 feet per minute (fpm)), web exit temperature of 149°C (300°F), and with Rosos KSP 500 M-3 fountain solution. The pH of the fountain solution was 3.7 and the conductivity was 1950S (mhos). This ink dried at speeds up to 2.5 m/s (500 fpm) at a web exit temperature of 149°C (300°F).

### Example 2 - Preparation of an Experimental Acrylic/Styrene Latex Polymer

An experimental acrylic/styrene latex polymer containing amine functionality and protective colloid was prepared from the following list of ingredients.

| INGREDIENTS | |
|---|---|
| A) Deionized water | 457.1g |
| B) JONCRYL resin 679* | 116.5g |
| C) NH₃ (30%, aqueous) | 23.4g |
| D) RHODOPON UB** | 3.0g |
| E) POLY G-D1200*** | 9.9g |
| F) Ammonium persulfate | 3.9g |
| G) Deionized water | 39.5g |
| H) Dimethylaminoethyl methacrylate 74.0g | |
| I) Styrene | 262.0g |
| J) 2-Ethylhexyl acrylate | 0.5g |
| K) Ammonium persulfate | 1.0g |
| L) Deinoized water | 10.0g |

| | |
|---|---|
| *JONCRYL 679 is a styrene acrylic resin available from Johnson Polymer that is water soluble in the presence of ammonia. **RHODOPON UB: sodium lauryl sulfate, 30% aqueous (Rhodia, inc.). ***POLY G-D1200: Polypropylene glycol, molecular weight 1200 (BASF). | |

The polymerization was carried out under a nitrogen blanket in a 4-neck 2.0-liter round bottom flask at a temperature of 88°C.

Briefly, ingredients A, C, D, and E were charged and heated to 88°C. When the temperature reached between 75 and 80°C, ingredient B was added over a 20 to 30 minute period. After all of B is added, the temperature was held for 50-60 minutes at 88°C in order for all of B to dissolve. Then, 50% of F & G ingredient mixture was added followed by 10% of H, I, & J ingredient mixture.

Twenty minutes thereafter, the remaining F & G ingredient mixture and H, I, & J ingredient mixture were added over 1.5 hours. An hour later, a K & L ingredient mixture was added over 20 minutes and the temperature was held at 88°C for 1 hour then cooled to room temperature to discharge.

The resulting latex emulsion had a pH of 8.28 with solids averaging 46.6% (2 readings. The Brookfield viscosity was measured at 154 mPa·s (cP) (spindle 3, 60 rpm, 25°C).

### Example 3- Preparation and testing of Experimental Black Ink

An experimental Black Ink was prepared from the following list of ingredients.

| Ingredient | | % |
|---|---|---|
| 1. | VSPR-75 (phenolic modified rosin ester, | 11.5 |
| | acid #18, softening point-146-166°C, | |
| | Ascona/Akzo Nobel) | |
| 2. | RP-305 (phenolic modified rosin ester, | 11.5 |
| | acid #132, softening point-128°C, Westvaco) | |
| 3. | Ethylhexyltallate (Chemol) | 31.6 |
| 4. | Raven 760 (Black pigment, Columbian | 12.0 |
| | Chemicals Company) | |
| 5. | Alkali blue flush (BASF Corp.) | 2.6 |
| | 6. Microcrystalllline wax compound | 1.4 |
| | (Carrol Scientific) | |
| 7. | PTFE compound (Shamrock Technologies) | 0.4 |
| 8. | Experimental Latex of Example 2 | 29.0 |
| | | 100.0 |

Briefly, the RP-305, VSPR-75 and ethylhexyltallate were combined in an ointment tin and heated on a hot plate with stirring until the mixture becomes molten and homogeneous. The mixture was then allowed to cool to room temperature. The Raven 760 was then dispersed in the mixture and grinded on a 3-roll mill until it became smooth and well dispersed. The mixture was placed in a glass jar where Add the alkali blue, microcrystalline wax compound, and PTFE compounds were added with stirring until they were mixed thoroughly. The experimental latex of Example 2 was then added to the mixture in the jar with stirring and mixed thoroughly to form the ink

The tack of the ink was measured on the Go Technology Digital inkometer at a speed of 1200 rpm. The tack after one minute was 8.7 gram -meters. The viscosity of the ink was measured on the automated Duke Viscometer. The viscosity of the ink was 8 Pa·s (80 poise). The ink was printed on Rochester Institute of Technology's (R.I.T.s) Harris M -1000 web offset heatset press, with a web exit temperature of 149°C (300°F), and with Anchor Premium MEXH IIS fountain solution. The pH of the fountain solution was 4.3 and the conductivity was 1900S (mhos). This experimental ink dried at 5m/s (1000 fpm) at a web exit temperature of 149°C (800°F).

### Example 3- Preparation and testing of Experimental Cyan ink

An experimental Cyan ink was prepared from the following list of ingredients.

| Ingredients | | % |
|---|---|---|
| 1. | VSPR-75 (phenolic modified rosin ester, | 12.1 |
| | acid #18, softening point-146-166°C. | |
| | Ascona/Akzo Nobel) | |
| 2. | RP-305 (phenolic modified rosin ester, | 12.1 |
| | acid #132, softening point-128°C, Westvaco) | |
| 3. | Ethylhexyltallate (Chemol) | 32.5 |
| 4. | Blue Pigment B-15:3 (Sun Chemical) | 12.0 |
| 5. | Microcrystalline wax compound | 1.7 |
| | (Carroll Scientific) | |
| 6. | PTFE compound (Shamrock Technologies) | 0.6 |
| 7. | Experimental Latex of Example 2 | 29.0 |
| | | 100.0 |

Briefly, the RP-305, VSPR-75 and ethythexyltallate were combined in an ointment tin and heated on a hot plate with stirring until the mixture becomes molten and homogeneous. The mixture was allowed to cool to room temperature. The Pigment Blue 15:3 was dispersed in the mixture and grinded on a 3-roll mill until it became smooth and well dispersed. The mixture was placed in a glass jar where the microcrystalline wax compound, and PTFE compound were added to the mixture in with stirring and mixed thoroughly. The Experimental Latex of Example 2 was added to the mixture in the jar with stirring and mixed thoroughly to form the ink.

The tack of the ink was measured on the Go Technology Digital lnkometer at a-speed of 1200 rpm. The tack after one minute was 9.2 gram-meters. The viscosity of the ink was measured on the automated Duke Viscometer. The viscosity of the ink was 13 Pa·s(130 poise). The ink was printed on Rochester Institute of Technology (R.I.T.'s) Harris M- 1000 web offset heatset press, with a web exit temperature of 149°C (300°F), and with Anchor Premium MEXH IIS fountain solution. The pH of the fountain solution was 4.3 and the conductivity was 1900S (mhos).The ink dried at 5m/s (1000 fpm) at a web exit temperature of 149°C (300°F).

### Example 4 - Preparation and testing of Experimental Magenta Ink

An experimental Magenta Ink was prepared from the following list of ingredients.

| Ingredients | | % |
|---|---|---|
| 1. | VSPR-75 (phenolic modified rosin ester, | 12.4 |
| | acid #18, softening point-146-166°C, | |
| | Ascona/Akzo Nobel) | |
| 2. | RP-305 (phenolic modified rosin ester, | 12.4 |
| | acid#132, softening point-128°C, Westvaco) | |
| 3. | Ethylhexyltallate (Chemol) | 33.7 |
| 4. | Red Pigment R.57-1 (Sun Chemical) | 10.2 |
| 5. | Microcrystalline wax compound | 1.7 |
| | (Carroll Scientific) | |
| 6. | PTFE compound (Shamrock Technologies) | 0.6 |
| 7. | Experimental Latex of Example 2 | 29.0 |
| | | 100.0 |

Briefly, the RP-305, VSPR-75 and ethylhexyltallate were combined in an ointment tin and heated on a hot plate with stirring until molten and homogeneous. The mixture was allowed to cool to room temperature. The Red Pigment R57-1 was dispersed in the mixture and grinded on a 3-roll mill until it became smooth and well dispersed. The mixture is then placed in a glass jar where the microcrystalline wax compound, and PTFE compounds were added to it with stirring and mixed thoroughly. The experimental latex of Example 2 was added to the mixture in the jar with stirring and mixed thoroughly to form the ink.

The tack of the ink was measured on the Go Technology Digital inkometer at a speed of 1200 rpm. The tack after one minute was 10.1 gram- meters. The viscosity of the ink was measured on the automated Duke Viscometer. The viscosity of the ink was 17,5 Pa·s (175 poise). The ink was printed on Rochester Institute of Technology's (R.I.T.'s) Harris M -1000 web offset heatset press, with a web exit temperature of 149°C (300°F), and with Anchor Premium MXH IIS fountain solution. The pH of the fountain solution was 4.3 and the conductivity was 1900S (mhos). The ink dried at speeds up to 8m/s (1600 fpm) at a web exit temperature of 149°C (300°F).

### Example 5 - Preparation and testing of Experimental Yellow Ink

An experimental Yellow ink was prepared from the following list of ingredients.

| Ingredients | | % |
|---|---|---|
| 1. | VSPR-75 (phenolic modified rosin ester, acid #18, softening point-146-166°C, Asconal/Akzo Nobel) | 12.2 |
| 2. | RP-305 (phenolic modified rosin ester, | 12.2 |
| | acid #132, softening point-128°C, Westvaco) | |
| 3. | Ethylhexyltallate (Chemol) | 33.5 |
| 4. | Yellow Pigment Y-12 (Sun Chemical) | 10.8 |
| 5. | Microcrystalliine wax compound | 1.7 |
| | (Carroll Scientific) | |
| 7. | PTFE compound (Shamrock Technologies) | 0.6 |
| 8. | Latex R3118-10 (acrylic/styrene emulsion, | 29.0 |
| | Sun Chemical) | 100.0 |

Briefly, the RP-305, VSPR-75 and ethylhexyltallate were combined in an ointment tin and heated on a hot plate with stirring until the mixture becomes molten and homogeneous. The mixture was then allowed to cool to room temperature. The Yellow Pigment 12 was dispersed In the mixture and grinded on a 3-roll mill until it became smooth and well dispersed. The mixture was placed in a glass jar where the microcrystalline wax compound, and PTFE compounds were added to the mixture in the jar with stirring and Mixed thoroughly. The experimental latex of Example 2 was added to the mixture in the jar with stirring and mixed thoroughly to form the ink

The tack of the ink was measured on the Go Technology Digital inkometer at a speed of 1200 rpm: The tack after one minute was 9.7 gram meters. The viscosity of the ink was measured on the automated Duke Viscometer. The viscosity of the ink was 15Pa·s (150 poise). The ink was printed on Rochester institute of Technology's (R.I.T.'s) Harris M -1000 web offset heatset press, with a web exit temperature of 149°C (300°F), and with Anchor Premium MEXH IIS fountain solution. The pH of the fountain solution was 4.3 and the conductivity was 1900S (mhos). The ink dried at speeds up to 5m/s (1000 fpm) at a web exit temperature of 149°C (300°F).

## Claims

1. A Web Offset heatset ink composition comprising an aqueous polymer latex dispersed in an ink base that comprises:
(a) an ink resin;
(b) a non-volatile plasticizer; and
(c) a pigment;
wherein said polymer latex has amine functional groups and comprises a protective colloid which comprises acid functional groups and wherein said ink has less than about 2 percent by weight of volatile organic compounds (VOC).

2. The ink composition of claim 1, wherein said polymer latex is acrylic:styrene copolymer latex.

3. The ink composition of any one of claims 1 to 2, wherein said non-volatile plasticizer is ethylhexyltallate.

4. The ink composition of any one of claims 1 to 3, wherein said ink resin comprises acid functional groups.

5. The ink composition of any one of claims 1 to 4 containing about 0 percent by weight of volatile organic compounds (VOC).

6. Use of an aqueous polymer latex having amine functional groups and comprising a protective colloid which comprises acid functional groups for increasing drying or setting speed of a Web Offset heatset ink composition which has less than about 2 percent by weight of volatile organic compounds (VOC) and which comprises:
(a) an ink resin;
(b) a non-volatile plasticizer; and
(c) a pigment.

7. Use of claim 6, wherein said polymer latex is acrylic : styrene copolymer latex.

8. Use of any one of claims 6 to 7, wherein said non-volatile plasticizer is ethylhexyltallate.

9. Use of any one of claims 6 to 8, wherein said ink resin comprises acid functional groups.

10. Use of any one of claims 6 to 9, wherein said ink composition contains about 0 percent by weight of volatile organic compounds (VOC).

11. Use of an aqueous polymer latex having amine functional groups and a protective colloid which comprises acid functional groups for increasing shelf stability of a Web Offset heatset ink composition which has less than about 2 percent by weight of volatile organic compounds (VOC) and which comprises:
(a) an ink resin;
(b) a non-volatile plasticizer; and
(c) a pigment.

12. Use of claim 11, wherein said polymer latex is acrylic:styrene copolymer latex.

13. Use of claim 11 or 12, wherein said non-volatile plasticizer is ethylhexyltallate.

14. Use of any one of claims 11 to 13, wherein said ink resin comprises acid functional groups.

15. Use of any one of claims 11 to 14, wherein said ink composition contains about 0 percent by weight of volatile organic compounds (VOC).

## Patentansprüche

1. Heatset-Druckfarbenzusammensetzung für den Rollenoffsetdruck, umfassend einen wässrigen Polymerlatex, der in einer Druckfarbenbasis dispergiert ist, die umfasst:
(a) ein Druckfarbenharz
(b) einen nichtflüchtigen Weichmacher; und
(c) ein Pigment;
wobei der Polymerlatex funktionelle Amingruppen aufweist und ein Schutzkolloid umfasst, welches funktionelle Säuregruppen umfasst und wobei die Druckfarbe weniger als ungefähr 2 Gew.-% flüchtiger organischer Verbindungen (VOC) aufweist.

2. Druckfarbenzusammensetzung gemäß Anspruch 1, wobei der Polymerlatex Acrylsäure-Styrol-Copolymerlatex ist.

3. Druckfarbenzusammensetzung gemäß einem der Ansprüche 1 bis 2, wobei der nichtflüchtige Weichmacher Ethylhexyltallat ist.

4. Druckfarbenzusammensetzung gemäß einem der Ansprüche 1 bis 3, wobei das Druckfarbenharz funktionelle Säuregruppen umfasst.

5. Druckfarbenzusammensetzung gemäß einem der Ansprüche 1 bis 4, enthaltend ungefähr 0 Gew.-% flüchtiger organischer Verbindungen (VOC).

6. Verwendung eines wässrigen Polymerlatex mit funktionellen Amingruppen und ein Schutzkolloid umfassend, das funktionelle Säuregruppen zur Erhöhung der Trocknungs- oder Aushärtgeschwindigkeit einer Heatset-Druckfarbenzusammensetzung für den Rollenoffsetdruck umfasst, die weniger als ungefähr 2 Gew.-% flüchtiger organischer Verbindungen (VOC) aufweist und folgendes umfasst:
(a) ein Druckfarbenharz;
(b) einen nichtflüchtigen Weichmacher; und
(c) ein Pigment.

7. Verwendung gemäß Anspruch 6, wobei der Polymerlatex Acrylsäure-Styrol-Copolymerlatex ist.

8. Verwendung gemäß einem der Ansprüche 6 bis 7, wobei der nichtflüchtige Weichmacher Ethylhexyltallat ist.

9. Verwendung gemäß einem der Ansprüche 6 bis 8, wobei das Druckfarbenharz funktionelle Säuregruppen umfasst.

10. Verwendung gemäß einem der Ansprüche 6 bis 9, wobei die Druckfarbenzusammensetzung ungefähr 0 Gew.-% flüchtiger organischer Verbindungen (VOC) enthält.

11. Verwendung eines wässrigen Polymerlatex mit funktionellen Amingruppen und einem Schutzkolloid, das funktionelle Säuregruppen umfasst, zur Erhöhung der Stabilität einer Heatset-Druckfarbenzusammensetzung für den Rollenoffsetdruck, die weniger als ungefähr 2 Gew.-% flüchtiger organischer Verbindungen (VOC) aufweist und die folgendes umfasst:
(a) ein Druckfarbenharz;
(b) einen nichtflüchtigen Weichmacher; und
(c) ein Pigment.

12. Verwendung gemäß Anspruch 11, wobei der Polymerlatex Acrylsäure-Styrol-Copolymerlatex ist.

13. Verwendung gemäß Anspruch 11 oder 12, wobei der nichtflüchtige Weichmacher Ethylhexyltallat ist.

14. Verwendung gemäß einem der Ansprüche 11 bis 13, wobei das Druckfarbenharz funktionelle Säuregruppen umfasst.

15. Verwendung gemäß einem der Ansprüche 11 bis 14, wobei die Druckfarbenzusammensetzung ungefähr 0 Gew.-% flüchtiger organischer Verbindungen (VOC) enthält.

## Revendications

1. - Composition d'encre durcissant par la chaleur pour rotative offset, comprenant un latex de polymère aqueux dispersé dans une base d'encre qui comprend :
(a) une résine d'encre ;
(b) un plastifiant non volatil ; et
(c) un pigment ;
dans laquelle ledit latex de polymère a des groupes fonctionnels amine et comprend un colloïde protecteur qui comprend des groupes fonctionnels acide et dans laquelle ladite encre a moins d'environ 2 pour cent en poids de composés organiques volatils (VOC).

2. - Composition d'encre selon la revendication 1, dans laquelle ledit latex de polymère est un latex de copolymère acrylique:styrène.

3. - Composition d'encre selon l'une quelconque des revendications 1 à 2, dans laquelle ledit plastificant non volatil est le tallate d'éthylhexyle.

4. - Composition d'encre selon l'une quelconque des revendications 1 à 3, dans laquelle ladite résine d'encre comprend des groupes fonctionnels acide.

5. - Composition d'encre selon l'une quelconque des revendications 1 à 4, contenant environ 0 pour cent en poids de composés organiques volatils (VOC).

6. - Utilisation d'un latex de polymère aqueux ayant des groupes fonctionnels amine et comprenant un colloïde protecteur qui comprend des groupes fonctionnels acide pour augmenter la vitesse de séchage ou de durcissement d'une composition d'encre durcissant par la chaleur pour rotative offset qui a moins d'environ 2 pour cent en poids de composés organiques volatils (VOC) et qui comprend :
(a) une résine d'encre ;
(b) un plastifiant non volatil ; et
(c) un pigment.

7. - Utilisation selon la revendication 6, dans laquelle ledit latex de polymère est un latex de copolymère acrylique:styrène.

8. - Utilisation selon l'une quelconque des revendications 6 à 7, dans laquelle ledit plastifiant non volatil est le tallate d'éthylhexyle.

9. - Utilisation selon l'une quelconque des revendications 6 à 8, dans laquelle ladite résine d'encre comprend des groupes fonctionnels acide.

10. - Utilisation selon l'une quelconque des revendications 6 à 9, dans laquelle ladite composition d'encre contient environ 0 pour cent en poids de composés organiques volatils (VOC).

11. - Utilisation d'un latex de polymère aqueux ayant des groupes fonctionnels amine et un colloïde protecteur qui comprend des groupes fonctionnels acide pour augmenter la stabilité d'une composition d'encre durcissant par la chaleur pour rotative offset qui a moins d'environ 2 pour cent en poids de composés organiques volatils (VOC) et qui comprend :
(a) une résine d'encre ;
(b) un plastifiant non volatil ; et
(c) un pigment.

12. - Utilisation selon la revendication 11, dans laquelle ledit latex de polymère est un latex de copolymère acrylique:styrène.

13. - Utilisation selon la revendication 11 ou 12, dans laquelle ledit plastifiant non volatil est le tallate d'éthylhexyle.

14. - Utilisation selon l'une quelconque des revendications 11 à 13, dans laquelle ladite résine d'encre comprend des groupes fonctionnels acide.

15. - Utilisation selon l'une quelconque des revendications 11 à 14, dans laquelle ladite composition d'encre contient environ 0 pour cent en poids de composés organiques volatils (VOC).
